# EUROPEAN PATENT APPLICATION

(11) **EP 1 389 837 A1**
(43) Date of publication of application: **18.02.2004**
(21) Application number: 02771572.1
(22) Date of filing: 20.05.2002
(51) Int. Cl.: H04B 7/10, H01Q 3/26

(54) **ARRAY ANTENNA TRANSMITTER/RECEIVER AND ITS CALBRATION METHOD**

(30) Priority: 23.05.2001 JP 2001153973
(71) Applicant: NEC Corporation, Minato-ku, Tokyo 108-8001 (JP)
(72) Inventor: MARUTA, Yasushi, c/o NEC Corporation, Tokyo 108-8001 (JP)
(74) Representative: Baronetzky, Klaus, Dipl.-Ing.
(86) International application number: PCT/JP2002/004847
(87) International publication number: WO 2002/095983

(57) **Abstract**

In an array antenna transmission/reception apparatus having an array antenna 10 with a plurality of antenna elements, and a plurality of radio transmission/reception units 30-1 to 30-n arranged in correspondence with the respective antenna elements, a calibration signal is generated at an arbitrary time interval in bursts, frequency-converted, and supplied to the radio transmission/reception units 30-1 to 30-n. A calibration signal processing unit 30 detects the difference between an original calibration signal and the calibration signal having passed through the radio transmission/reception units, and generates amplitude/phase information 200 which is corrected in accordance with amplitude/phase fluctuations generated in the radio transmission/reception units. Based on the temporal change of the amplitude/phase information, a calibration interval determination unit 90 and the calibration signal processing unit 30 determine whether a predetermined calibration precision satisfies a predetermined standard, and so control as to prolong the calibration interval as long as possible within the range in which the calibration precision satisfies the predetermined standard.

## Description

### Technical Field

The present invention relates to an array antenna transmission/reception apparatus which suppresses interference with another user by antenna directivity control in a cellular mobile communication system or the like and, more particularly, to an array antenna transmission/reception apparatus and calibration method which perform calibration in order to compensate for the delay characteristics and amplitude characteristics of a plurality of transmission/reception units in transmission or reception.

### Background Art

A conventional array antenna transmission/reception apparatus of this type exhibits different amplitude fluctuations and different phase fluctuations in a plurality of transmission/reception units corresponding to antenna elements depending on variations in the delay characteristics and amplitude characteristics of an amplifier, filter, and the like serving as the building components of the transmission/reception units. In forming a directional pattern, amplitude fluctuations and phase fluctuations must be detected and compensated. Calibration is executed to detect and compensate for amplitude fluctuations and phase fluctuations.

As disclosed in, e.g., Japanese Patent Laid-Open No. 11-46180, an array antenna transmission/reception apparatus which performs such calibration supplies to each radio reception unit a calibration signal having substantially the same frequency band as that of a spread signal used for spread spectrum communication, detects at least one of the delay characteristic and amplitude characteristic of the radio reception unit from the calibration signal having passed through the radio reception unit, and can accurately correct the delay characteristic or amplitude characteristic such that the delay characteristics or amplitude characteristics of radio reception units, which depend on the frequency, become uniform.

However, the conventional array antenna transmission/reception apparatus multiplexes a calibration signal on a user reception signal in operation. This increases an interference component to the user signal, degrading the reception characteristic.

The conventional array antenna transmission/reception apparatus described above suffers degradation in reception characteristic due to an increase in interference component to a user signal caused by multiplexing a calibration signal on the user reception signal in operation.

### Disclosure of Invention

The present invention has been made to overcome the conventional drawbacks, and has as its object to provide an array antenna transmission/reception apparatus and the like which have a high-quality transmission/reception characteristic almost free from any interference wave component by multiplexing a burst calibration signal on a user transmission signal or user reception signal.

It is another object of the present invention to provide an array antenna transmission/reception apparatus and the like which have a high-quality transmission/reception characteristic almost free from any interference wave component by multiplexing a low-transmission-power calibration signal on a user transmission signal or user reception signal.

It is still another object of the present invention to provide an array antenna transmission/reception apparatus and the like which have a higher-quality transmission/reception characteristic further free from any interference wave component by multiplexing a burst calibration signal on a user transmission signal or user reception signal, and prolonging the burst interval of the calibration signal.

It is still another object of the present invention to provide an array antenna transmission/reception apparatus and the like which have a higher-quality transmission/reception characteristic further free from any interference wave component by multiplexing a low-transmission-power burst calibration signal on a user transmission signal or user reception signal, and prolonging the burst interval of the calibration signal.

To achieve the above objects, the first array antenna transmission/reception apparatus according to the present invention having an array antenna constituted by arranging n (n is an integer of not less than 1) antenna elements, n radio transmission/reception units which are arranged in correspondence with the respective antenna elements, and user signal processing units corresponding to a number m (m is an integer of not less than 1) of users is characterized by comprising calibration means for multiplexing a calibration signal on a user transmission signal or a user reception signal, and supplying the calibration signal to the radio transmission/reception units to compensate for amplitude/phase fluctuations generated in the radio transmission/reception units, in transmission or reception.

The second array antenna transmission/reception apparatus according to the present invention having an array antenna constituted by arranging n (n is an integer of not less than 1) antenna elements, n radio transmission/reception units which are arranged in correspondence with the respective antenna elements, and user signal processing units corresponding to a number m (m is an integer of not less than 1) of users is characterized by comprising calibration means for multiplexing a calibration signal generated in bursts on a user transmission signal or a user reception signal, and supplying the calibration signal to the radio transmission/reception units to compensate for amplitude/phase fluctuations generated in the radio transmission/reception units, in transmission or reception.

The third array antenna transmission/reception apparatus according to the present invention having an array antenna constituted by arranging n (n is an integer of not less than 1) antenna elements, n radio transmission/reception units which are arranged in correspondence with the respective antenna elements, and user signal processing units corresponding to a number m (m is an integer of not less than 1) of users is characterized by comprising calibration means for multiplexing a calibration signal lower in power than a user transmission signal or a user reception signal on the user transmission signal or the user reception signal, and supplying the calibration signal to the radio transmission/reception units to compensate for amplitude/phase fluctuations generated in the radio transmission/reception units, in transmission or reception.

The first calibration method according to the present invention for an array antenna transmission/reception apparatus having an array antenna with a plurality of antenna elements, and a plurality of radio transmission/reception units arranged in correspondence with the respective antenna elements is characterized by comprising generating a calibration signal at an arbitrary time interval in bursts, frequency-converting the calibration signal, supplying the frequency-converted calibration signal to the radio transmission/reception units, detecting a difference between an original calibration signal and the calibration signal having passed through the radio transmission/reception units, generating amplitude/phase information which is corrected in accordance with amplitude/phase fluctuations generated in the radio transmission/reception units, determining on the basis of a temporal change of the amplitude/phase information whether a predetermined calibration precision satisfies a predetermined standard, and so controlling as to prolong the calibration interval as long as possible within a range in which the calibration precision satisfies the predetermined standard.

The second calibration method according to the present invention for an array antenna transmission/reception apparatus having an array antenna with a plurality of antenna elements, and a plurality of radio transmission/reception units arranged in correspondence with the respective antenna elements is characterized by comprising generating a calibration signal at an arbitrary time interval in bursts, frequency-converting the calibration signal, supplying the frequency-converted calibration signal to the radio transmission/reception units, detecting a difference between an original calibration signal and the calibration signal having passed through the radio transmission/reception units, generating amplitude/phase information which is corrected in accordance with amplitude/phase fluctuations generated in the radio transmission/reception units, determining whether a predetermined calibration precision satisfies a predetermined standard, on the basis of a temporal change of a signal to interference ratio (SIR) or a bit error rate (BER) measured from the calibration signal having passed through the radio transmission/reception units, and so controlling as to prolong the calibration interval as long as possible within a range in which the calibration precision satisfies the predetermined standard.

The third calibration method according to the present invention for an array antenna transmission/reception apparatus having an array antenna constituted by arranging n (n is an integer of not less than 1) antenna elements, and n radio transmission/reception units which are arranged in correspondence with the respective antenna elements is characterized by comprising, in transmission or reception, multiplexing a calibration signal generated in bursts on a user transmission signal or a user reception signal, supplying the calibration signal to the radio transmission/reception units, detecting a difference between an original calibration signal and the calibration signal having passed through the radio transmission/reception units, and compensating on the basis of the detected difference for amplitude/phase fluctuations generated in the radio transmission/reception units.

The fourth calibration method according to the present invention for an array antenna transmission/reception apparatus having an array antenna constituted by arranging n (n is an integer of not less than 1) antenna elements, and n radio transmission/reception units which are arranged in correspondence with the respective antenna elements is characterized by comprising, in transmission or reception, multiplexing a low-power calibration signal lower in power than a user transmission signal or a user reception signal on the user transmission signal or the user reception signal, supplying the calibration signal to the radio transmission/reception units, detecting a difference between an original calibration signal and the calibration signal having passed through the radio transmission/reception units, and compensating on the basis of the detected difference for amplitude/phase fluctuations generated in the radio transmission/reception units.

### Brief Description of Drawings

Fig. 1 is a block diagram showing one embodiment of an array antenna transmission/reception apparatus according to the present invention;
Fig. 2 is a block diagram showing the connection of the array antenna transmission/reception apparatus shown in Fig. 1 in reception;
Fig. 3 is a timing chart showing an example of a calibration signal used in the array antenna transmission/reception apparatus shown in Fig. 1; and
Fig. 4 is a block diagram showing the connection of the array antenna transmission/reception apparatus shown in Fig. 1 in transmission.

### Best Mode for Carrying Out the Invention

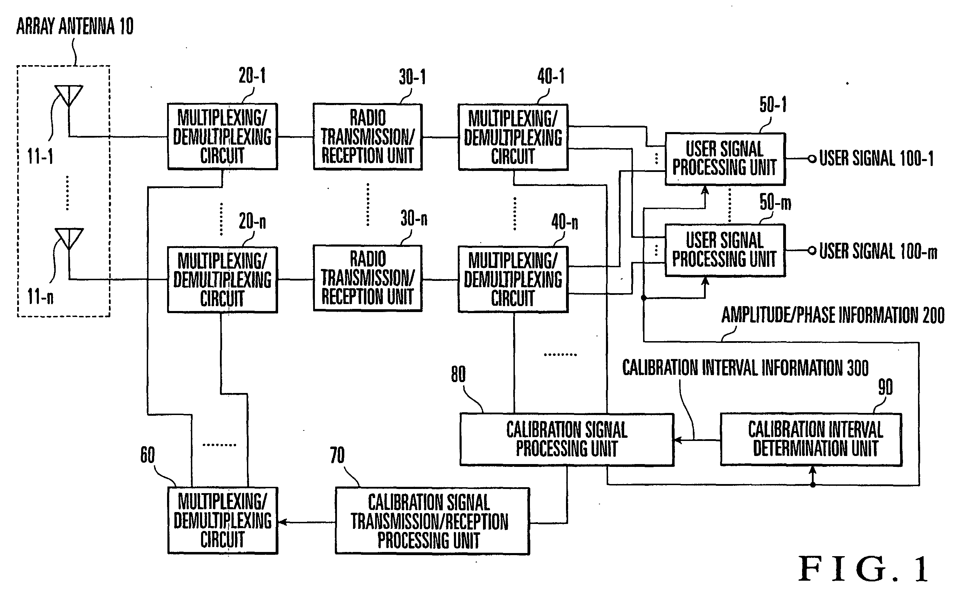

An embodiment of the present invention will be described below with reference to the accompanying drawings. Fig. 1 is a block diagram showing one embodiment of an array antenna transmission/reception apparatus according to the present invention.

The embodiment shown in Fig. 1 comprises an array antenna 10, multiplexing/demultiplexing circuits 20-1 to 20-n corresponding to a number n of antenna elements (n is an integer of 1 or more), radio transmission/reception units 30-1 to 30-n, multiplexing/demultiplexing circuits 40-1 to 40-n, user signal processing units 50-1 to 50-m corresponding to a number m of users (m is an integer of 1 or more), a multiplexing/demultiplexing circuit 60, a calibration signal transmission/reception processing unit 70, a calibration signal processing unit 80, and a calibration interval determination unit 90.

The operation of the array antenna transmission/reception apparatus according to the embodiment will be explained in detail with reference to Fig. 1.

Referring to Fig. 1, in the array antenna 10, n antenna elements 11-1 to 11-n are arranged adjacent to each other such that the radio frequency (RF) transmission/reception signals of the respective antenna elements have correlation with reach other. The antenna elements 11-1 to 11-n each have omnidirectivity or dipole directivity as horizontal and vertical directivities.

In reception, the multiplexing/demultiplexing circuits 20-1 to 20-n receive outputs from the antenna elements 11-1 to 11-n and a calibration signal output from the multiplexing/demultiplexing circuit 60, multiplex them in the radio frequency (RF) band, and output the multiplexed signals to the radio transmission/reception units 30-1 to 30-n. In transmission, the multiplexing/demultiplexing circuits 20-1 to 20-n receive outputs from the radio transmission/reception units 30-1 to 30-n on which a calibration signal is multiplexed, demultiplex them, and output the demultiplexed signals to the antenna elements 11-1 to 11-n and multiplexing/demultiplexing circuit 60.

When the multiplexing/demultiplexing circuits 20-1 to 20-n perform code multiplexing, they can adopt power adders or power distributors which operate in the radio frequency band. In the user of power adders or power distributors, directional couplers are desirably used to prevent emission of a calibration signal from an antenna element.

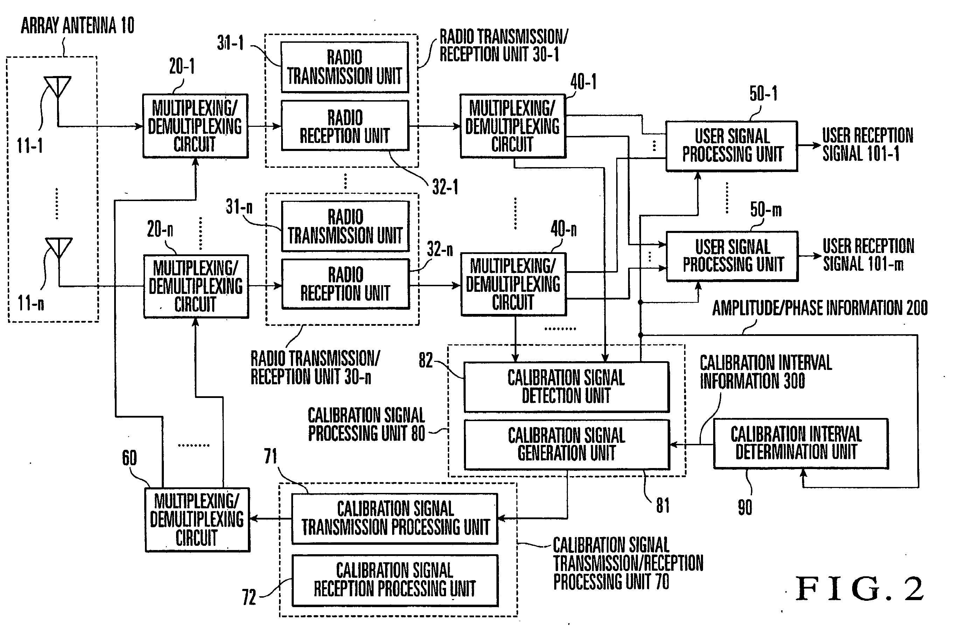

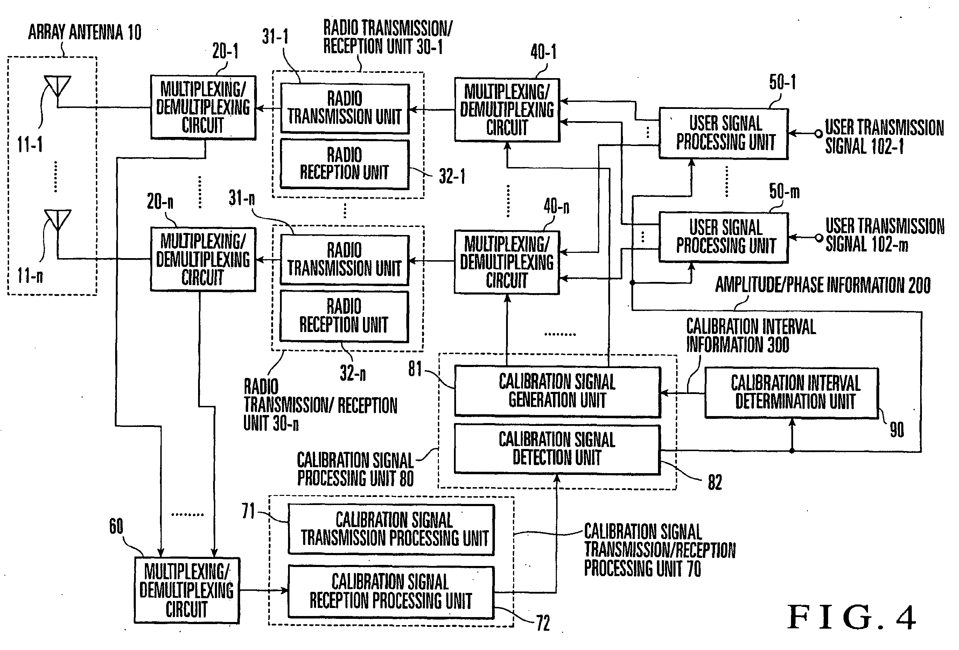

As shown in Figs. 2 and 4, the radio transmission/reception units 30-1 to 30-n are constituted by radio transmission units 31-1 to 31-n and radio reception units 32-1 to 32-n. Only the radio reception units 32-1 to 32-n are used in reception, and only the radio transmission units 31-1 to 31-n are used in transmission. The radio reception units 32-1 to 32-n receive outputs from the multiplexing/demultiplexing circuits 20-1 to 20-n, execute low-noise amplification, frequency conversion from the radio frequency (RF) band to the base band (BB), quadrature detection, and analog/digital conversion, and output the resultant signals to the multiplexing/demultiplexing circuits 40-1 to 40-n. Also, the radio transmission units 31-1 to 31-n receive outputs from the multiplexing/demultiplexing circuits 40-1 to 40-n, execute digital/analog conversion, quadrature modulation, frequency conversion from the base band to the radio frequency band, and power amplification after frequency conversion, and output the resultant signals to the multiplexing/demultiplexing circuits 20-1 to 20-n. Building components such as local oscillators for frequency conversion can be shared between the radio transmission units 31-1 to 31-n and the radio reception units 32-1 to 32-n.

In reception, the multiplexing/demultiplexing circuits 40-1 to 40-n receive outputs from the radio transmission/reception units 30-1 to 30-n, demultiplex the outputs in the base band, and output the demultiplexed signals to the user signal processing units 50-1 to 50-m of respective users and the calibration signal processing unit 80. In transmission, the multiplexing/demultiplexing circuits 40-1 to 40-n receive outputs from the user signal processing units 50-1 to 50-m of respective users and an output from the calibration signal processing unit 80, multiplex the outputs at the intermediate frequency, and output the resultant signals to the radio transmission/reception units 30-1 to 30-n.

The multiplexing/demultiplexing circuits 40-1 to 40-n can adopt power adders or power distributors which operate in the base band.

In reception, the user signal processing units 50-1 to 50-m receive outputs from the multiplexing/demultiplexing circuits 40-1 to 40-n, and output user signals 100-1 to 100-m which are formed on the basis of the reception directional pattern while correcting the outputs by using amplitude/phase information 200 output from the calibration signal processing unit 80. In transmission, the user signal processing units 50-1 to 50-m output signals which are formed on the basis of the transmission directional pattern while correcting the externally input user signals 100-1 to 100-m by using the amplitude/phase information 200.

In reception, the multiplexing/demultiplexing circuit 60 receives an output from the calibration signal transmission/reception processing unit 70, demultiplexes the output in the base band, and outputs the demultiplexed signal to the multiplexing/demultiplexing circuits 20-1 to 20-n. In transmission, the multiplexing/demultiplexing circuit 60 receives outputs from the multiplexing/demultiplexing circuits 20-1 to 20-n, multiplexes the outputs in the radio frequency band, and outputs the multiplexed signal to the unit 70. Similar to the multiplexing/demultiplexing circuits 20-1 to 20-n, the multiplexing/demultiplexing circuit 60 can adopt a power adder or power distributor which operates in the radio frequency band.

As shown in Figs. 2 and 4, the calibration signal transmission/reception processing unit 70 comprises a calibration signal transmission processing unit 71 and calibration signal reception processing unit 72. Only the calibration signal transmission processing unit 71 is used in reception, and only the calibration signal reception processing unit 72 is used in transmission.

The calibration signal transmission processing unit 71 receives an output from the calibration signal processing unit 80, performs digital/analog conversion, frequency conversion from the base band to the radio frequency band, and the like, and outputs the resultant signal to the multiplexing/demultiplexing circuit 60. The calibration signal reception processing unit 72 receives an output from the multiplexing/demultiplexing circuit 60, performs frequency conversion from the radio frequency band to the base band, analog/digital conversion, and the like, and outputs the resultant signal to the calibration signal processing unit 80. That is, the calibration signal transmission/reception processing unit 70 reversibly processes a calibration signal between the radio frequency band and the base band.

As shown in Figs. 2 and 4, the calibration signal processing unit 80 is comprised of a calibration signal generation unit 81 and calibration signal detection unit 82.

The calibration signal generation unit 81 generates a base-band calibration signal in bursts on the basis of calibration interval information 300 output from the calibration interval determination unit 90, and outputs the calibration signal to the calibration signal transmission/reception processing unit 70 in reception and the multiplexing/demultiplexing circuits 40-1 to 40-n in transmission.

The calibration signal detection unit 82 receives outputs from the multiplexing/demultiplexing circuits 40-1 to 40-n in reception and an output from the calibration signal transmission/reception processing unit 70 in transmission. The calibration signal detection unit 82 detects the differences between an original calibration signal output from the calibration signal generation unit 81 and n calibration signals extracted in correspondence with the radio transmission/reception units 30-1 to 30-n, thus obtaining n pieces of amplitude/phase information 200. The calibration signal detection unit 82 then outputs the pieces of amplitude/phase information 200 to the user signal processing units 50-1 to 50-m and calibration interval determination unit 90.

The calibration interval determination unit 90 receives the amplitude/phase information 200 output from the calibration signal detection unit 82, and determines a calibration interval as long as possible within the range in which the calibration precision satisfies a predetermined standard. The calibration interval determination unit 90 then outputs the calibration interval as the calibration interval information 300 to the calibration signal generation unit 81. In this manner, the calibration interval determination unit 90 generates the calibration interval information 300 for changing the calibration interval.

Reception operation of the array antenna transmission/reception apparatus according to the embodiment will be explained with reference to Fig. 2 which is a block diagram showing the connection of the array antenna transmission/reception apparatus in Fig. 1 in reception.

Referring to Fig. 2, the multiplexing/demultiplexing circuits 20-1 to 20-n receive outputs from the antenna elements 11-1 to 11-n and n demultiplexed calibration signals output from the multiplexing/demultiplexing circuit 60, multiplex them in the radio frequency band, and supply the multiplexed signals to the radio reception units 32-1 to 32-n.

The radio reception units 32-1 to 32-n perform signal processing from the radio frequency band to the base band for outputs from the multiplexing/demultiplexing circuits 20-1 to 20-n, and output the resultant signals to the multiplexing/demultiplexing circuits 40-1 to 40-n.

The multiplexing/demultiplexing circuits 40-1 to 40-n receive outputs from the radio reception units 32-1 to 32-n, demultiplex the outputs in the base band, and supply the demultiplexed signals to the user signal processing units 50-1 to 50-m of respective users and the calibration signal detection unit 82.

The user signal processing units 50-1 to 50-m receive outputs from the multiplexing/demultiplexing circuits 40-1 to 40-n and the amplitude/phase information 200 output from the calibration signal detection unit 82, and use the amplitude/phase information 200 to perform correction corresponding to amplitude/phase fluctuations generated in the radio reception units 32-1 to 32-n. At the same time as correction, the user signal processing units 50-1 to 50-m form reception directional patterns which increase the reception gain in the user signal arrival directions of respective users and decrease the reception gain for interference with another user or a delayed wave. Based on the formed reception directional patterns, the user signal processing units 50-1 to 50-m accurately identify signal components having different arrival directions from signals output from the multiplexing/demultiplexing circuits 40-1 to 40-n, and output user reception signals 101-1 to 101-m.

Even if amplitude/phase fluctuations occur inside the radio reception units 32-1 to 32-n in the array antenna transmission/reception apparatus during reception, correct reception directional patterns can be formed by the above correction, reducing degradation in reception quality.

As for the arrangement, reception directional pattern formation algorithm, and correction method of the user signal processing units 50-1 to 50-m, which are not directly related to the present invention, optimal ones are selected.

The calibration signal detection unit 82 receives outputs from the multiplexing/demultiplexing circuits 40-1 to 40-n. The calibration signal detection unit 82 detects the differences between an original calibration signal output from the calibration signal generation unit 81 and calibration signals corresponding to the radio reception units 32-1 to 32-n, thus obtaining n pieces of amplitude/phase information 200. The calibration signal detection unit 82 outputs the pieces of amplitude/phase information 200 to the user signal processing units 50-1 to 50-m and calibration interval determination unit 90.

The calibration interval determination unit 90 receives the amplitude/phase information 200 output from the calibration signal detection unit 82, and determines a calibration interval as long as possible within the range in which the calibration precision satisfies a predetermined standard. The calibration interval determination unit 90 outputs the calibration interval as the calibration interval information 300 to the calibration signal generation unit 81.

As a method of determining that the calibration precision satisfies a predetermined standard, for example, the appropriateness of the calibration precision can be indirectly determined by checking whether the temporal change amount of the amplitude/phase information 200 output from the calibration signal detection unit 82 is small when the calibration time interval is prolonged. Alternatively, the temporal change of bit error rate (BER) information obtained from a known calibration signal or signal to interference ratio (SIR) information from BER information of the calibration signal may be obtained instead of the amplitude/phase information 200, and the appropriateness can be determined from the SIR temporal change. In this case, a low BER of the calibration signal means a high SIR.

The total power of a calibration signal at a given calibration interval can be minimized by controlling the power level and output time of a burst-generated calibration signal within the range in which the calibration precision satisfies a predetermined standard.

The calibration interval determination unit 90 outputs the calibration interval information 300 so as to prolong the interval of the calibration signal as long as possible or minimize the total power, thereby reducing the influence on the user reception signals 101-1 to 101-m.

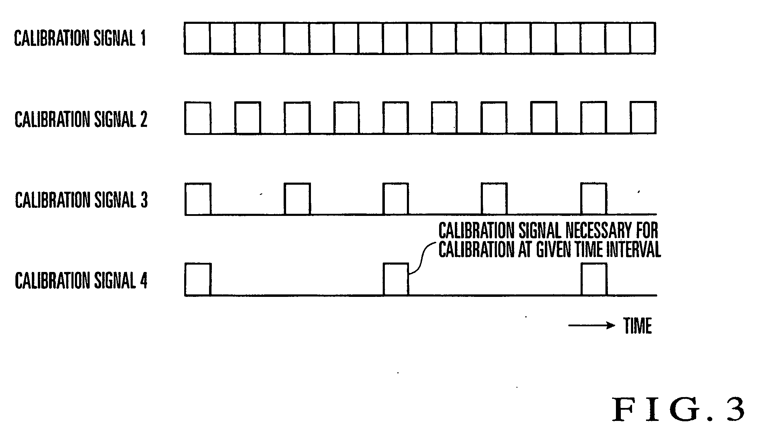

In this case, the calibration interval information 300 is output by adding numbers (e.g., 1 to 4) to calibration signals having different calibration intervals and selecting the calibration signals in the calibration signal generation unit 81, as shown in Fig. 3, or directly ON/OFF-controlling the outputs of calibration signals.

Also, power level information of a calibration signal can be added to the calibration interval information 300 to simultaneously control the power level of a base-band calibration signal output from the calibration signal generation unit 81.

As for the standard of the calibration precision, a proper value is selected.

The calibration signal generation unit 81 generates a base-band calibration signal on the basis of the calibration interval information 300 output from the calibration interval determination unit 90, and outputs the calibration signal to the calibration signal transmission processing unit 71.

The calibration signal transmission processing unit 71 receives the base-band calibration signal output from the calibration signal generation unit 81, and outputs the calibration signal frequency-converted to the radio frequency band to the multiplexing/demultiplexing circuit 60.

The multiplexing/demultiplexing circuit 60 receives the output from the calibration signal transmission processing unit 71, demultiplexes the output in the radio frequency band, and supplies the demultiplexed signal to the multiplexing/demultiplexing circuits 20-1 to 20-n which multiplex the signals on RF user reception signals.

Transmission operation of the array antenna transmission/reception apparatus according to the embodiment will be explained with reference to Fig. 4 which is a block diagram showing the connection of the array antenna transmission/reception apparatus in Fig. 1 in transmission.

Referring to Fig. 4, the multiplexing/demultiplexing circuits 20-1 to 20-n receive outputs from the radio transmission units 31-1 to 31-n of the radio transmission/reception units 30-1 to 30-n, demultiplex the outputs in the radio frequency band, and output the demultiplexed signals to the antenna elements 11-1 to 11-n and multiplexing/demultiplexing circuit 60.

The multiplexing/demultiplexing circuit 60 receives the outputs from the multiplexing/demultiplexing circuits 20-1 to 20-n, multiplexes them in the radio frequency band, and outputs the multiplexed signal to the calibration signal reception processing unit 72.

The calibration signal reception processing unit 72 receives the radio-frequency-band calibration signal output from the multiplexing/demultiplexing circuit 60, and outputs the calibration signal frequency-converted to the base band to the calibration signal detection unit 82.

The calibration signal detection unit 82 receives the output from the calibration signal reception processing unit 72. The calibration signal detection unit 82 detects the differences between an original calibration signal output from the calibration signal generation unit 81 and calibration signals corresponding to the radio transmission units 31-1 to 31-n, thereby obtaining n pieces of amplitude/phase information 200. The calibration signal detection unit 82 outputs the pieces of amplitude/phase information 200 to the user signal processing units 50-1 to 50-m and calibration interval determination unit 90.

The calibration interval determination unit 90 receives the amplitude/phase information 200 output from the calibration signal detection unit 82, and determines a calibration interval as long as possible within the range in which the calibration precision satisfies a predetermined standard. The calibration interval determination unit 90 then outputs the calibration interval as the calibration interval information 300 to the calibration signal generation unit 81.

Also in transmission, similar to reception, the calibration interval determination unit 90 outputs the calibration interval information 300 so as to prolong the interval of the calibration signal as long as possible or minimize the total power, thereby reducing the influence on user transmission signals 102-1 to 102-m.

The calibration signal generation unit 81 generates a base-band calibration signal on the basis of the calibration interval information 300 output from the calibration interval determination unit 90, and outputs the calibration signal to the multiplexing/demultiplexing circuits 40-1 to 40-n.

The user signal processing units 50-1 to 50-m receive the externally input user transmission signals 102-1 to 102-m and the amplitude/phase information 200 output from the calibration signal detection unit 82, and use the amplitude/phase information 200 to perform correction corresponding to amplitude/phase fluctuations generated in the radio transmission units 31-1 to 31-n. At the same time as correction, the user signal processing units 50-1 to 50-m form transmission directional patterns which increase the transmission gain in the user signal transmission directions of respective users and decrease the transmission gain in the directions of other users. The user signal processing units 50-1 to 50-m output to the multiplexing/demultiplexing circuits 40-1 to 40-n the user transmission signals 102-1 to 102-m based on the formed transmission directional patterns.

Even if amplitude/phase fluctuations occur inside the radio transmission units 31-1 to 31-n in the array antenna transmission/reception apparatus during transmission, correct transmission directional patterns can be formed by the above correction, reducing degradation in transmission quality.

Similar to reception, as for the arrangement, transmission directional pattern formation algorithm, and correction method of the user signal processing units 50-1 to 50-m, optimal ones are selected.

The multiplexing/demultiplexing circuits 40-1 to 40-n receive outputs from the user signal processing units 50-1 to 50-m and an output from the calibration signal generation unit 81, multiplex the outputs in the base band, and output the multiplexed signals to the radio transmission units 31-1 to 31-n.

The radio transmission units 31-1 to 31-n receive the base-band signals output from the multiplexing/demultiplexing circuits 40-1 to 40-n, and output the signals frequency-converted to the radio frequency band to the multiplexing/demultiplexing circuits 20-1 to 20-n.

According to the above-described embodiment, while the calibration precision is maintained at a predetermined standard in transmission or reception, the time interval of a calibration signal is set as long as possible, and the total power of a burst-generated calibration signal is minimized, thus suppressing interference with a user signal. Hence, a high-quality transmission/reception characteristic can be obtained in operation.

This embodiment is not limited to radio transmission, but can also be applied to code division multiple access (CDMA).

As has been described above, the array antenna transmission/reception apparatus and calibration method according to the present invention obtain the following effects.
(1) A high-quality transmission/reception characteristic almost free from any interference wave component can be obtained by multiplexing a burst calibration signal on a user transmission signal or user reception signal.
(2) A high-quality transmission/reception characteristic almost free from any interference wave component can be obtained by multiplexing a low-transmission-power calibration signal on a user transmission signal or user reception signal.
(3) A higher-quality transmission/reception characteristic further free from any interference wave component can be obtained by multiplexing a calibration signal having a long burst interval on a user transmission signal or user reception signal.
(4) A higher-quality transmission/reception characteristic further free from any interference wave component can be obtained by multiplexing a low-transmission-power calibration signal having a long burst interval on a user transmission signal or user reception signal.

## Claims

1. An array antenna transmission/reception apparatus having an array antenna constituted by arranging n (n is an integer of not less than 1) antenna elements, n radio transmission/reception units which are arranged in correspondence with the respective antenna elements, and user signal processing units corresponding to a number m (m is an integer of not less than 1) of users, **characterized by** comprising calibration means for multiplexing a calibration signal on a user transmission signal or a user reception signal, and supplying the calibration signal to the radio transmission/reception units to compensate for amplitude/phase fluctuations generated in the radio transmission/reception units, in transmission or reception.

2. An array antenna transmission/reception apparatus according to claim 1, **characterized in that** said calibration means is constituted by first multiplexing/demultiplexing units which are connected between the radio transmission/reception units and the antenna elements, in reception, multiplex the calibration signal on RF (Radio Frequency) user reception signals received by the antenna elements, and in transmission, demultiplex RF user transmission signals on which the calibration signal is multiplexed, second multiplexing/demultiplexing units which are connected between the radio transmission/reception units and the user signal processing units, in reception, demultiplex BB (Base Band) user reception signals on which the calibration signal is multiplexed, and in transmission, multiplex the calibration signal on BB user transmission signals, a calibration signal processing unit which generates the calibration signal, detects a difference between an original calibration signal and the calibration signal having passed through the radio transmission/reception units, and outputs amplitude/phase information to the user signal processing units, a calibration signal transmission/reception processing unit which converts a frequency of the calibration signal between a radio frequency and a base frequency, a third multiplexing/demultiplexing unit which is connected between the first multiplexing/demultiplexing units and the calibration signal transmission/reception processing unit, and multiplexes/demultiplexes and transfers a signal, and a calibration interval determination unit which determines a calibration interval on the basis of the amplitude/phase information and outputs calibration interval information to the calibration signal processing unit.

3. An array antenna transmission/reception apparatus according to claim 2, **characterized in that** the calibration signal processing unit is constituted by a calibration signal generation unit which outputs the calibration signal in bursts on the basis of the calibration interval information output from the calibration interval determination unit, and a calibration signal detection unit which receives the calibration signal having passed through the radio transmission/reception units, detects the difference between the calibration signal and the original calibration signal, and outputs the amplitude/phase information.

4. An array antenna transmission/reception apparatus according to claim 2, **characterized in that**, in reception, the calibration signal processing unit supplies an output from the calibration signal generation unit to the calibration signal transmission/reception processing unit, causes the calibration signal detection unit to detect a difference between the original calibration signal and the calibration signal extracted from the BB user reception signal demultiplexed and output from the second multiplexing/demultiplexing unit, and outputs the amplitude/phase information, in transmission, supplies an output from the calibration signal generation unit to the second multiplexing/demultiplexing units which multiplex the output on the BB user transmission signals output from the user signal processing units, causes the calibration signal detection unit to detect a difference between the original calibration signal and the calibration signal extracted from the RF user transmission signal converted into the base frequency by the calibration signal transmission/reception processing unit, and outputs the amplitude/phase information.

5. An array antenna reception apparatus according to claim 2, **characterized in that** the calibration interval determination unit receives the amplitude/phase information output from the calibration signal processing unit, determines on the basis of a temporal change of the amplitude/phase information whether a predetermined calibration precision satisfies a predetermined standard, and outputs the calibration interval information so determined as to prolong the calibration interval as long as possible within a range in which the calibration precision satisfies the predetermined standard.

6. An array antenna reception apparatus according to claim 2, **characterized in that** the calibration interval determination unit determines whether a predetermined calibration precision satisfies a predetermined standard, on the basis of bit error rate (BER) information obtained by measuring BER of the calibration signal, and outputs the calibration interval information so determined as to prolong the calibration interval as long as possible within a range in which the calibration precision satisfies the predetermined standard.

7. An array antenna reception apparatus according to claim 2, **characterized in that** the calibration interval determination unit determines whether a predetermined calibration precision satisfies a predetermined standard, on the basis of signal to interference ratio (SIR) information obtained by measuring SIR of the calibration signal, and outputs the calibration interval information so determined as to prolong the calibration interval as long as possible within a range in which the calibration precision satisfies the predetermined standard.

8. An array antenna reception apparatus according to claim 1, **characterized in that** the user signal processing units correct the amplitude/phase fluctuations generated in the radio transmission/reception units on the basis of the amplitude/phase information, form directional patterns proper to users, and output user signals in reception or transmission on the basis of the formed directional patterns.

9. A calibration method for an array antenna transmission/reception apparatus having an array antenna with a plurality of antenna elements, and a plurality of radio transmission/reception units arranged in correspondence with the respective antenna elements, **characterized by** comprising generating a calibration signal at an arbitrary time interval in bursts, frequency-converting the calibration signal, supplying the frequency-converted calibration signal to the radio transmission/reception units, detecting a difference between an original calibration signal and the calibration signal having passed through the radio transmission/reception units, generating amplitude/phase information which is corrected in accordance with amplitude/phase fluctuations generated in the radio transmission/reception units, determining on the basis of a temporal change of the amplitude/phase information whether a predetermined calibration precision satisfies a predetermined standard, and so controlling as to prolong the calibration interval as long as possible within a range in which the calibration precision satisfies the predetermined standard.

10. A calibration method for an array antenna transmission/reception apparatus having an array antenna with a plurality of antenna elements, and a plurality of radio transmission/reception units arranged in correspondence with the respective antenna elements, **characterized by** comprising generating a calibration signal at an arbitrary time interval in bursts, frequency-converting the calibration signal, supplying the frequency-converted calibration signal to the radio transmission/reception units, detecting a difference between an original calibration signal and the calibration signal having passed through the radio transmission/reception units, generating amplitude/phase information which is corrected in accordance with amplitude/phase fluctuations generated in the radio transmission/reception units, determining whether a predetermined calibration precision satisfies a predetermined standard, on the basis of a temporal change of a signal to interference ratio (SIR) or a bit error rate (BER) measured from the calibration signal having passed through the radio transmission/reception units, and so controlling as to prolong the calibration interval as long as possible within a range in which the calibration precision satisfies the predetermined standard.

11. An array antenna transmission/reception apparatus having an array antenna constituted by arranging n (n is an integer of not less than 1) antenna elements, n radio transmission/reception units which are arranged in correspondence with the respective antenna elements, and user signal processing units corresponding to a number m (m is an integer of not less than 1) of users, **characterized by** comprising calibration means for multiplexing a burst-generated calibration signal on a user transmission signal or a user reception signal, and supplying the calibration signal to the radio transmission/reception units to compensate for amplitude/phase fluctuations generated in the radio transmission/reception units, in transmission or reception.

12. An array antenna transmission/reception apparatus according to claim 11, **characterized in that** a burst interval of the calibration signal is changed.

13. An array antenna transmission/reception apparatus according to claim 11, **characterized in that** the calibration signal includes a low-power signal.

14. An array antenna transmission/reception apparatus having an array antenna constituted by arranging n (n is an integer of not less than 1) antenna elements, n radio transmission/reception units which are arranged in correspondence with the respective antenna elements, and user signal processing units corresponding to a number m (m is an integer of not less than 1) of users, **characterized by** comprising calibration means for multiplexing a low-power calibration signal on a user transmission signal or a user reception signal, and supplying the calibration signal to the radio transmission/reception units to compensate for amplitude/phase fluctuations generated in the radio transmission/reception units, in transmission or reception.

15. An array antenna transmission/reception apparatus according to claim 14, the calibration signal includes a burst signal.

16. An array antenna transmission/reception apparatus according to claim 15, **characterized in that** a burst interval of the calibration signal is changed.

17. A calibration method for an array antenna transmission/reception apparatus having an array antenna constituted by arranging n (n is an integer of not less than 1) antenna elements, and n radio transmission/reception units which are arranged in correspondence with the respective antenna elements, **characterized by** comprising, in transmission or reception, multiplexing a calibration signal generated in bursts on a user transmission signal or a user reception signal, supplying the calibration signal to the radio transmission/reception units, detecting a difference between an original calibration signal and the calibration signal having passed through the radio transmission/reception units, and compensating on the basis of the detected difference for amplitude/phase fluctuations generated in the radio transmission/reception units.

18. A calibration method for an array antenna transmission/reception apparatus according to claim 17, **characterized in that** a burst interval of the calibration signal is changed.

19. A calibration method for an array antenna transmission/reception apparatus according to claim 18, **characterized in that** the calibration signal includes a low-power signal.

20. A calibration method for an array antenna transmission/reception apparatus having an array antenna constituted by arranging n (n is an integer of not less than 1) antenna elements, and n radio transmission/reception units which are arranged in correspondence with the respective antenna elements, **characterized by** comprising, in transmission or reception, multiplexing a low-power calibration signal on a user transmission signal or a user reception signal, supplying the calibration signal to the radio transmission/reception units, detecting a difference between an original calibration signal and the calibration signal having passed through the radio transmission/reception units, and compensating on the basis of the detected difference for amplitude/phase fluctuations generated in the radio transmission/reception units.

21. A calibration method for an array antenna transmission/reception apparatus according to claim 20, the calibration signal includes a burst signal.

22. A calibration method for an array antenna transmission/reception apparatus according to claim 21, **characterized in that** a burst interval of the calibration signal is changed.
